# EUROPÄISCHE PATENTSCHRIFT

(11) **EP 0 535 603 B1**
(45) Veröffentlichungstag und Bekanntmachung des Hinweises auf die Patenterteilung: **08.03.2000**
(21) Anmeldenummer: 92116665.8
(22) Anmeldetag: 29.09.1992
(51) Int. Cl.: H03H 17/02

(54) **Aktives Oberwellenfilter**
Active harmonic filter
Filtre d'harmoniques actif

(30) Priorität: 30.09.1991 DE 4132551
(43) Veröffentlichungstag der Anmeldung: 07.04.1993
(60) Teilanmeldung: 96108784.8
(73) Patentinhaber: SIEMENS AKTIENGESELLSCHAFT, 80333 München (DE)
(72) Erfinder: Wetzel, Klaus, Ing.-grad., W-8000 München 83 (DE); Biebl, Alois, Ing. (FH), W-8421 St. Johann (DE)

(56) Entgegenhaltungen:
- EP-A- 0 254 073
- WO-A-87/00365
- DE-A- 3 545 771
- DE-A- 4 123 005
- HOROWITZ ET AL: 'The Art of Electronics', 1980, CAMBRIDGE UNIVERSITY PRESS, CAMBRIDGE, UK * Seite 174 - Seite 175 *
- GREBENE: 'Bipolar and MOS analog integrated circuit design', 1984, JOHN WILEY & SONS pages 58,66, fig. 2.6 and 2.10

## Beschreibung

Die Erfindung betrifft ein Oberwellenfilter nach dem Oberbegriff des Patentanspruches 1.

Stark wechselnde Lasten, wie beispielsweise zur Leistungsregelung getaktete Verbraucher, verursachen auf der Zuleitung zwischen Versorgungsspannungsquelle und Verbraucher(n) Stromänderungen mit steilen Flanken. Als Folge davon treten auf der Zuleitung elektromagnetische Funkstörungen (EMI) auf, die wiederum andere Verbraucher negativ beeinflussen können. Darüber hinaus sind diesbezüglich auch Vorschriften mit entsprechenden EMI-Grenzwerten, vor allem bei Kraftfahrzeugen mit einer Vielzahl von sehr unterschiedlichen Verbrauchern, nur sehr schwer einzuhalten.

Elektromagnetischen Funkstörungen wurde bisher mit passiven Filtern begegnet, die den Anteil der aufgrund der steilen Flanken auftretenden Oberwellen verringern. Derartige passive Filter bestehen meistens aus Kapazitäten und Widerständen bzw. Induktivitäten. Um jedoch eine zufriedenstellende Oberwellendämpfung zu erzielen, sind Filter mit verhältnismäßig großen Abmessungen notwendig.

Aus der EP 0 254 073 ist ein aktives und ein passives Filter bekannt, die zusammen Oberwellen dämpfen. Diese sind jedoch relativ aufwendig und mittels Induktivitäten realisiert.

Aus der Veröffentlichung 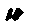 The Art of Electronics" Cambridge University Press, 1980, Seite 174, 175, ist ein Spannungsregler bekannt. Diese weist jedoch den Nachteil eines langsamen Nachladens bzw. einer langsamen Inbetriebnahme auf.

Aufgabe der Erfindung ist es daher, ein Oberwellenfilter anzugeben, das eine hohe Oberwellendämpfung bei geringem Raumbedarf aufweist und ein schnelles Laden der Kapazität ermöglicht.

Die Aufgabe wird durch ein Oberwellenfilter gemäß Patentanspruch 1 gelöst. Ausgestaltungen und Weiterbildungen des Erfindungsgedankes sind Gegenstand von Unteransprüchen.

Die Erfindung wird nachfolgend anhand der in den Figuren der Zeichnung dargestellten Ausführungsbeispiele näher erläutert, wobei gleiche Elemente mit gleicher Bezugszeichen versehen sind.

Es zeigt:
- Figur 1: ein erstes Ausführungsbeispiel eines erfindungsgemäßen Oberwellenfilters und
- Figur 2: ein Beispiel eines Oberwellenfilters.

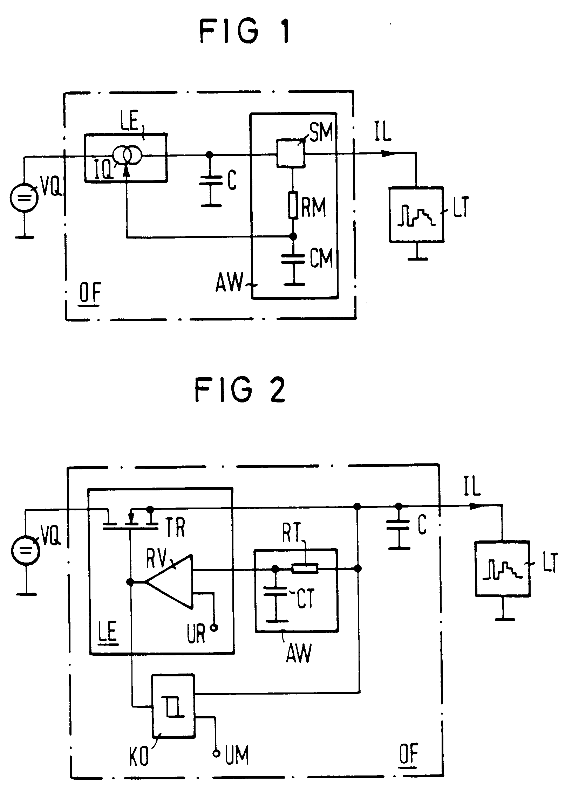

Bei dem Ausführungsbeispiel nach Figur 1 ist zwischen eine Versorgungsspannungsquelle VQ und eine Last LT ein erfindungsgemäßes Oberwellenfilter OF geschaltet. Das Oberwellenfilter OF enthält eine Kapazität C, die der Last LT parallel geschaltet ist. Weiterhin ist eine steuerbare Ladeeinrichtung LE vorgesehen, die zwischen Versorgungsspannungsquelle VQ und Kapazität C geschaltet ist. Eine Auswerteschaltung AW ermittelt den durch die Last LT fließenden mittleren Strom und steuert davon abhängig die Ladeeinrichtung LE.

Die Last LT setzt sich beispielsweise aus mehreren Verbrauchern zusammen, die zur Leistungsregelung getaktet werden. Dadurch ergibt sich ein treppenartiger Verlauf des durch die Last fließenden Stromes IL. Dieser Strom IL wird durch eine Strommeßeinrichtung SM ermittelt, wovon anschließend mit Hilfe eines Tiefpasses der Mittelwert gebildet wird. Der Tiefpaß besteht aus einem Widerstand RM, der zwischen den Ausgang der Strommeßeinrichtung SM und dem Steuereingang der Ladeeinrichtung LE geschaltet ist. Darüber hinaus enthält der Tiefpaß einen Kondensator CM der zwischen einen Steuereingang der Ladeeinrichtung LE und einem Bezugspotential geschaltet ist. An diesem Bezugspotential liegt auch jeweils ein Anschluß der Versorgungsspannungsquelle VQ, der Kapazität C und der Last LT. Zwischen dem jeweils anderen Anschluß der Versorgungsspannungsquelle VQ und der Kapazität C ist eine steuerbare Stromeinprägung IQ geschaltet, welche die Ladeeinrichtung LE bildet. Die Strommeßeinrichtung SM sowie der aus dem Widerstand RM und der Kapazität CM bestehende Tiefpaß bilden dabei die Auswerteeinheit AW. Das Ausführungsbeispiel nach Figur 2 ist gegenüber dem Ausführungsbeispiel nach Figur 1 dahingehend abgeändert, daß die Ladeeinrichtung LE als steuerbare Spannungseinprägung ausgebildet ist. Die Ladeeinrichtung LE besteht dabei aus einem Transistor TR, bevorzugt einem MOS-Feldeffekttransistor, dessen Sourceanschluß mit der Versorgungsspannungsquelle VQ und dessen Drainanschluß mit dem Kondensator C verbunden ist. Sein Gateanschluß ist mit dem Ausgang eines Regelverstärkers RV gekoppelt, dessen einer Eingang mit einer Referenzspannung UR beaufschlagt ist und dessen anderer Eingang mit dem Ausgang der Auswerteschaltung AW verbunden ist. Die Auswerteschaltung AW umfaßt dabei lediglich einen Tiefpaß bestehend aus einem Widerstand RT und einem Kondensator CT. Die Auswerteschaltung AW umfaßt bei dieser Ausführungsform keine Strommeßeinrichtung SM. Stattdessen ist der Eingang des Tiefpasses direkt an den Knotenpunkt zwischen Ladeeinrichtung LE und Kapazität C gelegt. An diesen Knotenpunkt ist zudem ein Eingang eines Komparators KO angeschlossen, dessen weiterer Eingang mit einer Vergleichsspannung UM beaufschlagt ist. Der Ausgang des Komparators KO ist dem Ausgang des Regelverstärkers RV parallel geschaltet.

Die Funktionsweise eines erfindungsgemäßen Oberwellenfilters besteht im wesentlichen darin, daß die Kapazität C mit einem Strom geladen wird, der dem mittleren Strombedarf der Last LT entspricht. Die Kapazität C sorgt dabei zum einen für eine annähernd gleichmäßige, an der Last LT anliegende Spannung und zum anderen werden kurzfristige Laststromspitzen aus der Kapazität C entnommen. Das Nachladen der Kapazität C kann, wie in Figur 1 gezeigt, beispielsweise durch eine steuerbare Stromquelle erfolgen, die abhängig vom Mittelwert des durch die Last fließenden Stromes IL gesteuert wird. Beim Ausführungsbeispiel nach Figur 2 erfolgt das Nachladen der Kapazität C mittels eines Spannungsreglers, dessen Spannung langsam erhöht (bzw. unter Umständen auch erniedrigt) wird. Das langsame Nachregeln wird dabei durch die Verzögerungseinrichtung bestehend aus dem Widerstand RT und der Kapazität CT erreicht. Als Eingangsgröße für die Verzögerungseinrichtung dient dabei die an der Kapazität C abfallende Spannung. Dabei wird davon ausgegangen, daß sich die Entnahme eines mittleren Laststromes durch einen entsprechenden Spannungsabfall an der Kapazität C äußert. Dies wird durch die Auswerteschaltung AW ermittelt und davon abhängig der Spannungregler aufgrund des Tiefpaßverhaltens der Auswerteschaltung AW zeitverzögert nachgestellt. Der Vorteil dabei ist, daß keine Strommeßeinrichtung SM benötigt wird, so daß der Aufwand insgesamt sehr gering ist.

Bei dem Oberwellenfilter OF nach Figur 2 ist der Komparator KO vorgesehen, der die an der Kapazität C anliegende Spannung mit einem Vergleichswert UM vergleicht. Beim Absinken der Spannung an der Kapazität C unter einen gegebenen Grenzwert, nämlich die Vergleichsspannung UM, schaltet der Komparator KO die Ladeeinrichtung LE bzw. den Transistor TR vollständig durch. Damit ist bei Inbetriebnahme der Anordnung oder bei kurzzeitigen Störfällen ein schnelles Nachladen der Kapazität C gewährleistet. Der Komparator KO wird bevorzugt mit Schalthysterese ausgeführt, damit beim Schnelladen der Kapazität C eine Energiereserve erzeugt wird. Andernfalls würden sich mehrere ungewollte Ladestromspitzen durch mehrmaliges Nachladen ergeben. Die Kapazität C kann dabei wesentlich kleiner gewählt werden, als bei üblichen Oberwellenfiltern.

## Patentansprüche

1. Oberwellenfilter zum stufenlosen Regeln von Strömen,
- das zwischen einer Versorgungsspannungsquelle (VQ) und einer Last (LT) geschaltet ist,
- mit einer zur Last (LT) parallel geschalteten Kapazität (C) zur Glättung eines durch die Last (LT) fließenden Stromes (IL),
- mit einer steuerbaren Ladeeinrichtung (LE), die zwischen der Versorgungsspannungsquelle (VQ) und der Kapazität (C) geschaltet ist und die eine steuerbare Stromeinprägung (IQ) zum Aufladen der Kapazität (C) aufweist,
- mit einer Auswerteeinrichtung (AW), die zwischen der Ladeeinrichtung (LE) und der Last (LT) geschaltet ist und die den mittleren durch die Last (LT) fließenden Strom (IL) ermittelt,
- wobei die Auswerteeinrichtung (AW) bei einer Abweichung des mittleren Stromes (IL) von einem vorgegebenen Wert die Ladeeinrichtung (LE) derart ansteuert, daß diese die Kapazität (C) nachlädt.

2. Oberwellenfilter nach Anspruch 1,
**dadurch gekennzeichnet,** daß, die Auswerteschaltung (AW) eine Strommeßeinrichtung (SM), die in Reihe zur Last (LT) geschaltet ist, und eine Mittelungseinrichtung (RM,CM), die den Mittelwert des von der Strommeßeinrichtung (SM) ermittelten Stromes (IL) bildet und davon abhängig die Ladeschaltung (LE) steuert, aufweist.

3. Oberwellenfilter nach Anspruch 2,
**dadurch gekennzeichnet,** daß die Mittelungseinrichtung(RM, CM) aus einem Tiefpaß besteht.

## Claims

1. Harmonic filter for continuous control of currents,
- which is connected between a supply voltage source (VQ) and a load (LT),
- having a capacitor (C) connected in parallel with the load (LT) for smoothing a current (IL) flowing through the load (LT),
- having a controllable charging device (LE), which is connected between the supply voltage source (VQ) and the capacitor (C) and has a controllable current impression device (IQ) for charging the capacitor (C),
- having an evaluation device (AW) which is connected between the charging device (LE) and the load (LT) and calculates the average current (IL) flowing through the load (LT),
- the evaluation device (AW) driving the charging device (LE), when the average current (IL) deviates from a predetermined value, in such a way that the latter recharges the capacitor (C).

2. Harmonic filter according to Claim 1, characterized in that the evaluation device (AW) has a current-measuring device (SM), which is connected in series with the load (LT), and an averaging device (RM, CM) which takes the average of the current (IL) measured by the current-measuring device (SM) and controls the charging circuit (LE) on the basis of this.

3. Harmonic filter according to Claim 2, characterized in that the averaging device (RM, CM) consists of a low-pass filter.

## Revendications

1. Filtre d'harmoniques pour régler des courants par palier,
- qui est branché entre une source (VQ) de tension d'alimentation et une charge (LT),
- qui comporte une capacité (C) qui est branchée en parallèle avec la charge (LT) et qui est destinée à lisser un courant (IL) passant dans la charge (LT),
- qui comporte un dispositif (LE) de charge, qui peut être commandé et qui est branché entre la source (VQ) de tension d'alimentation et la capacité (C) et qui comporte une applique (IQ) de courant pouvant être commandée pour charger la capacité (C),
- qui comporte un dispositif (AW) d'évaluation, qui est monté entre le dispositif (LE) de charge et la charge (LT) et qui détermine le courant (IL) moyen passant dans la charge (LT),
- le dispositif (AW) d'évaluation commandant, lorsque le courant (IL) moyen s'écarte d'une valeur prescrite, le dispositif (LE) de charge de manière que celui-ci recharge la capacité (C).

2. Filtre d'harmoniques suivant la revendication 1,
caractérisé en ce que le circuit (AW) d'évaluation comporte un dispositif (SM) de mesure de courant, qui est monté en série avec la charge (LT) et un dispositif (RM,CM) de formation d'une moyenne qui forme la valeur moyenne du courant (IL) déterminé par le dispositif (SM) de mesure de courant et qui commande en fonction de cela le circuit (LE) de charge.

3. Filtre d'harmoniques suivant la revendication 2,
caractérisé en ce que le dispositif (RM,CM) de formation de moyenne est constitué d'un passe-bas.
